# EUROPÄISCHE PATENTSCHRIFT

(11) **EP 3 235 181 B1**
(45) Veröffentlichungstag und Bekanntmachung des Hinweises auf die Patenterteilung: **01.02.2023**
(21) Anmeldenummer: 15832789.0
(22) Anmeldetag: 16.12.2015
(51) Int. Cl.: H04L 12/28, H04W 84/18, H04L 41/0853, H04L 12/403, H05B 47/19

(54) **GEBÄUDETECHNIK-KOMMUNIKATIONSSYSTEM**
BUILDING EQUIPMENT-BASED COMMUNICATION SYSTEM
SYSTÈME DE COMMUNICATION DOMOTIQUE

(30) Priorität: 19.12.2014 DE 202014106166 U; 26.05.2015 AT 1322015 U
(43) Veröffentlichungstag der Anmeldung: 25.10.2017
(73) Patentinhaber: Tridonic GmbH & Co. KG, 6851 Dornbirn (AT)
(72) Erfinder: BACHMANN, Johannes, 6840 Götzis (AT); LOCHMANN, Frank, 88147 Esseratsweiler (DE); MARTE, Patrick, 6840 Götzis (AT); MOOSMANN, Florian, 6840 Götzis (AT); OBLAK, Daniel, 6923 Lauterach (AT); TROPPACHER, Rainer, 6850 Dornbirn (AT)
(74) Vertreter: Rupp, Christian
(86) Internationale Anmeldenummer: PCT/AT2015/050319
(87) Internationale Veröffentlichungsnummer: WO 2016/094921

(56) Entgegenhaltungen:
- WO-A1-2008/027615
- WO-A1-2009/088901
- US-A1- 2014 273 892

## Beschreibung

Die Erfindung bezieht sich auf ein Gebäudetechnik-Kommunikationssystem und insbesondere auf ein Kommunikationssystem, das durch Gebäudetechnikgeräte, insbesondere Leuchten, gebildet ist.

Die Erfindung bezieht sich dabei im Wesentlichen auf ein Gebäudetechnik-Kommunikationssystem mit wenigstens einem Gebäudetechnikgerät, wobei mit dem Gebäudetechnikgerät wenigstens ein Sensor und/oder Aktor oder anderes Gebäudetechnikgerät verbindbar ist, vorzugsweise drahtlos verbunden ist.

Das mit dem Gebäudetechnikgerät verbundene Gerät (Sensor, Aktor und/oder Gebäudetechnikgerät) kann auch mittels anderer Sensoren/Aktoren mit dem Gebäudetechnikgerät kommunikativ verbunden sein. Das Gebäudetechnikgerät, das insbesondere als Leuchte mit einem Betriebsgerät zum Betrieb von wenigstens einem Leuchtmittel, insbesondere wenigstens einer LED, ausgestaltet sein kann, dient insbesondere als "Master-Einheit", d.h. als Hauptkommunikationseinheit, an das sogenannte "Slave-Einheiten", wie beispielsweise Sensoren und Aktoren, also untergeordnete Kommunikationseinheiten angeschlossen sind.

Das Gebäudetechnikgerät stellt dann einen Kommunikationskanal, beispielsweise zu anderen Gebäudetechnikgeräten oder aber in ein Netzwerk, wie z.B. das Internet und/oder zu einem Benutzer bereit und/oder erlaubt die Kommunikation der Slave-Einheiten untereinander, mit anderen Gebäudetechnikgeräten und/oder beispielsweise einer Zentraleinheit. Die Zentraleinheit kann insbesondere mit Gebäudetechnikgeräten die als Master-Geräte ausgebildet sind, über einen Kommunikationsbus, beispielsweise über einen Gebäudetechnikbus, der auf dem DALI-Standard basieren kann, verbunden sein.

WO 2009/088901 A1 offenbart ein Verfahren zum ferngesteuerten Betrieb einer Tür, bei dem ein für die Tür bestimmtes Signal zuerst über ein Netzwerk an ein Mesh Netzwerk Gateway übertragen wird. Von dem Gateway wird dann ein für das Mesh Netzwerk übersetztes Signal über Funkfrequenz-Signalisierung des Mesh Netzwerkes an die Tür übertragen.

WO 2008/027615 A1 offenbart ein Zigbee/IP Gateway mit einem Gateway Controller zur Umsetzung von Nachrichten zwischen den beiden Netzwerken. IP-seitige Ports können Clients des Zigbee Netzwerks zugewiesen werden.

US 2014/273892 A1 offenbart eine Leuchte mit integrierter drahtloser Netzwerkausstattung und Diversity Antenne. Die drahtlose Netzwerkausstattung kann zum Beispiel als Access Point oder Repeater verwendet werden.

Die Erfindung geht davon aus, dass in modernen Gebäuden zunehmend intelligente Einheiten, wie Sensoren und/oder Aktoren, eingesetzt werden, um im Sinne eines "intelligenten Gebäudes" Funktionen bereitzustellen, z.B. sensorische Überwachungen und entsprechend über Aktoren ausgelöste Funktionen. Weiter sind in einem Gebäude üblicherweise allgemein Gebäudetechnikgeräte, wie beispielsweise Leuchten, aber auch Lichtschalter, Steckdosen, Heizungs-Thermostate, TV-Kabel-Dosen, usw. vorhanden. Diese können als bereits vorhandene Infrastruktur genutzt werden, um zusätzliche Sensoren und/oder Aktoren in ein Gebäudetechnik-Kommunikationssystem einzubinden.

Um dies zu ermöglichen stellt die Erfindung ein Gebäudetechnik-Kommunikationssystem gemäß dem unabhängigen Anspruch bereit. Weitere Ausgestaltungen der Erfindung sind Gegenstand der abhängigen Ansprüche.

In einem ersten Aspekt wird ein Steuergerät für einen Aktor, bspw. ein Betriebsgerät für Leuchtmittel, oder Sensor im Bereich der Gebäudetechnik bereitgestellt, das zur drahtlosen adressierten Kommunikation ausgelegt ist und aufweist eine Schnittstelle zur drahtlosen Kommunikation mit einem zweiten Steuergerät, und eine Steuerschaltung zur Weiterleitung von von dem zweiten Steuergerät empfangenen Information an ein drittes, in der Information adressiertes Steuergerät, wenn sich das dritte Steuergerät nicht im Empfangs-/Sendebereich des zweiten Steuergeräts (40) befindet.

Die Steuerschaltung kann mit einem Speicher verbunden sein, in dem die mittels der drahtlosen Kommunikation erreichbaren weiteren Steuergeräte und ihre zugehörigen Adressen abgelegt sind.

Die Erfindung wird nunmehr auch mit Bezug auf die Figuren beschrieben. Dabei zeigt:

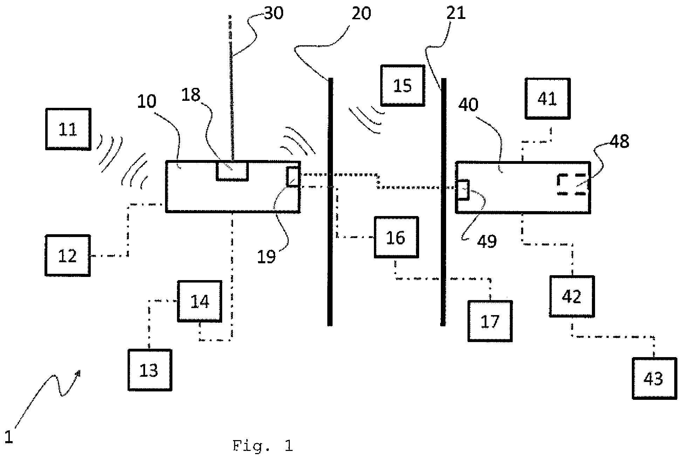

- Fig. 1: zeigt eine exemplarische Ausgestaltung der Erfindung.

Die Erfindung bezieht sich im Wesentlichen auf ein drahtloses ad-hoc Kommunikationsnetzwerk, das von zumindest einem Gebäudetechnikgerät als Master-Einheit und wenigstens einer Slave-Einheit z.B. einem Sensor oder Aktor (Aktuator), gebildet wird.

Insbesondere bezieht sich die Erfindung auf ein Gebäudetechniksystem, wie ein Beleuchtungssystem, in dem Leuchten als Gebäudetechnikgeräte zum Einsatz kommen, die wenigstens ein Betriebsgerät zum Betrieb von Leuchtmitteln aufweisen. Leuchten sind für gewöhnlich in vielen Räumen eines Gebäudes vorhanden und können somit als Kommunikationsknoten oder Hubs fungieren. Die Gebäudetechnikgeräte, bzw. die entsprechenden Leuchten fungieren daher als Hauptkommunikationsknoten oder "Master"-Einheiten, an die untergeordnete Kommunikationseinheiten, wie beispielsweise Sensoren oder Aktoren (im Folgenden als Slave-Einheiten bezeichnet) angebunden werden können.

Diese Anbindung erfolgt vorzugsweise drahtlos. Die Master-Einheiten können dann eine Kommunikation sowohl zwischen den verbundenen Slave-Einheiten herstellen, als auch eine Kommunikation zu anderen Master-Einheiten. So kann beispielsweise auch eine Verbindung der Slave-Einheiten mit einer Zentraleinheit erfolgen, indem die Slave-Einheiten über eine oder mehrere Master-Einheiten einen Kommunikationspfad z.B. zu einer Zentraleinheit aufbauen können.

Die Slave-Einheiten können indirekt als auch direkt mit einer Master-Einheit verbunden sein. Unter einer direkten Verbindung ist dabei zu verstehen, dass es einer Slave-Einheit möglich ist eine vorzugsweise drahtlose Verbindung mit einer Master-Einheit aufzubauen. Dies ist insbesondere dann erfolgreich wenn sich die Slave-Einheit abhängig von der eingesetzten Funktechnik (Bluetooth, ZigBee, NFC, IPv6,...) im Empfangs-/Sendebereich der Master-Einheit befindet, so dass eine Kommunikationsverbindung aufgebaut werden kann.

Ist dies nicht der Fall, so ist es gemäß der Erfindung möglich, dass eine Slave-Einheit (Sensor/Aktor) eine Verbindung mit einer sich im Emfpangs-/Sendebereich der Slave-Einheit befindlichen anderen Slave-Einheit aufbaut und so sukzessive eine Kommunikationsverbindung über mehrere Slave-Einheiten zu einer Master-Einheit aufbauen kann.

Für eine Kommunikation zwischen verschiedenen Master-Einheiten ist ebenfalls eine vorzugsweise drahtlose Kommunikationsverbindung (WiFi, ZigBee, Bluetooth, NFC, IPv6) vorgesehen. Es kann jedoch auch eine drahtgebundene Verbindung zwischen den Master-Einheiten bestehen, wie z.B. bekannte Gebäudetechnik-Bussysteme (z.B. Beleuchtungssystembus-Systeme). Insbesondere können die Master-Einheiten eine Kommunikationsschnittstelle zu einem IP-Netzwerk und/oder einem auf dem GSM/LTE-Standard aufbauenden Kommunikationsnetzwerk aufweisen (z.B. zum Senden von SMS-Nachrichten und/oder E-Mails).

In einem Gebäude muss daher folglich zunächst kein Netzwerk definiert sein. Vielmehr ist es möglich, dass die Master-Einheiten und/oder dies Slave-Einheiten autonom, beispielsweise nach ihrer Aktivierung, ein Kommunikationsnetzwerk ad-hoc aufbauen. So kann beispielsweise jede zur drahtlosen Kommunikation ausgestattete Slave-Einheit mit einer Master-Einheit Kontakt aufnehmen.

Es wird weiter davon ausgegangen, dass Slave-Einheiten und Master-Einheiten in dem zu etablierenden Netzwerk ortsfest sind und daher ein einmal aufgebauter Datenübermittlungskanal nicht jedes Mal neu getestet und vermittelt werden muss.

Vielmehr kann sowohl ein einfacher direkter als auch ein mehrstufiger Übertragungskanal bzw. eine Kommunikationsverbindung in den beteiligten Einheiten abgespeichert werden und so für die nächste Datenübermittlung verwendet werden. Beispielsweise kann die Master-Einheit für jede mit ihr verbundene Slave-Einheit zumindest einen Kommunikationspartner speichern, über den die entsprechende Slave-Einheit zu erreichen ist.

Die Mastereinheit speichert einen vollständigen Pfad zu einer Slave-Einheit.

Ebenso wird in jeder Slave-Einheit, über die eine weitere Slave-Einheit eine Kommunikationsverbindung herstellt, abgespeichert, welche Slave-Einheiten ausgehend von dieser Slave-Einheit erreichbar sind. Somit kann eine Kommunikation durch Aussenden von Nachrichten an den jeweils nächsten Kommunikationspartner erfolgen, der dann dafür sorgt, dass die entsprechenden Nachrichten weiter zum Empfänger geleitet werden. Dies ist auch vorteilhaft, da eine Deaktivierung der entsprechenden Einheiten nicht dazu führen muss, dass ein Neuaufbau des Kommunikationsnetzwerks erfolgen muss.

Dabei ist zu verstehen, dass sowohl die Slave-Einheiten, als auch die Master-Einheiten über mehrere Räume verteilt angeordnet sein können. Entscheidend ist letztlich nur, dass nach dem gewählten Kommunikationsstandard eine Erreichbarkeit der entsprechenden Einheiten gewährleistet ist.

Als Beispiel für übertragbare Daten sind einerseits Sensordaten, zu verstehen, die von einer Slave-Einheit zu einer Master-Einheit hin übertragen werden können. Andererseits können Konfigurationsdaten von der Master-Einheit an die angeschlossene Slave-Einheit übermittelt werden. Dies können zum Beispiel Verzögerungszeiten, Grenzwerte usw. sein. Somit kann auch in der Master-Einheit bereits zum Installationszeitpunkt eine Vorgabe bestimmter Konfigurationsparameter für verschiedene Slave-Einheiten vorgegeben werden, wobei, sollte zu einem späteren Zeitpunkt eine entsprechende Slave-Einheit (beispielsweise ein Tageslichtsensor) mit der Master-Einheit verbunden werden, dann entsprechende Konfigurationsanweisungen und Parameter an die neu verbundene Slave-Einheit übermittelt werden können.

Zur Verbindung einzelner Einheiten kann beispielsweise vorgesehen sein, dass nach einer Aktivierung der Master-Einheit und/oder einer Slave-Einheit, d.h. beispielsweise nach Einschalten einer Netzversorgung, für einen gewissen Zeitraum, beispielsweise eine vorbestimmte Zeitspanne, ein Modus aktiviert wird, in dem sowohl die Master-Einheit und/oder die Slave-Einheit dazu in der Lage sind, eine Kommunikationsverbindung mit einem neuen Partner aufzunehmen.

Ein solcher Modus kann auch durch eine entsprechende Benutzerschnittstelle (Taster, Schalter, Potentiometer,...) an der Slave-Einheit und/oder Master-Einheit eingestellt werden. Zudem ist es möglich, dass, wenn beispielsweise die Master-Einheiten zumindest teilweise über eine drahtgebundene Verbindung verbunden sind, insbesondere mit einer Zentraleinheit, auch ein entsprechender Modus durch ein extern zugeführtes Befehlssignal aktiviert wird.

Zudem oder alternativ kann selbstverständlich auch ein Konfigurationsgerät eingesetzt werden, das eine Verbindung, insbesondere mit der Master-Einheit aufnimmt, um so Konfigurationsparameter oder Kommunikationsparameter an die Master-Einheit zu übermitteln und so auch die angeschlossenen bzw. verbundenen Slave-Einheiten entsprechend zu konfigurieren.

Folglich kann ein Auslese-/Eingabegerät vorgesehen sein, mit dem ein Benutzer Vorgaben zu der Master-Einheit übertragen kann sowie entsprechende Daten über Konfiguration oder andere Informationen aus der Master-Einheit auslesen kann.

Der Vorteil der vorliegenden Erfindung ist also besonders darin zu sehen, dass die Slave-Einheiten über ein Mesh-Netzwerk, das auch als Overlay-Netzwerk, beispielsweise DHT-basiert, ausgebildet sein kann, zur Übertragung von Informationen verwendet werden kann. So können beispielsweise die Master-Einheiten, die wie gesagt als Leuchten ausgestaltet sein können, dazu verwendet werden, Informationen von dem angeschlossenen Slave-Einheiten zu signalisieren, beispielsweise über eine entsprechende Ansteuerung der Leuchtmittel (Blinken, Aus-/Einschalten, Farbortänderung, Dimmen, ...).

Alternativ oder zusätzlich kann das Gebäudetechnik-Betriebsgerät, das als Master-Einheit agiert, auch über einen anderen Kommunikationskanal bzw. eine Kommunikationsschnittstelle, beispielsweise E-Mail, SMS oder andere Nachrichtendienste Informationen versenden, beispielsweise ein Detektionsereignis eines Sensors oder eine damit assoziierte Nachricht übertragen. Es ist beispielsweise möglich, Informationen über eine erkannte Bewegung über einen Bewegungsmelder oder eine bestimmte Rauchkonzentration, die über einen Rauchmelder erkannt wird, über andere Kommunikationskanäle mittels einer Kommunikationsschnittstelle weiterzuübertragen und beispielsweise einen Benutzer darüber zu informieren.

Andererseits können über einen solchen Kommunikationskanal auch Konfigurationsinformationen übermittelt werden oder ein Benutzer kann beispielsweise bestimmte Aktoren anweisen, eine Aktion auszuführen. So könnten beispielsweise erst auf eine Benutzerinteraktion hin nach Erkennung einer Bewegung in verschiedenen Bereichen eines Gebäudes bestimmte Aktoren aktiviert werden, um beispielsweise Türen zu öffnen oder zu schließen. Auch ist es dem Benutzer so möglich beispielsweise durch Übertragung der Information an die Mastereinheit bestimmte Einstellungen oder Abläufe, wie beispielsweise einen Ablauf von Beleuchtungsszenen, abzurufen oder zu starten.

Auch können Konfigurationen, die beispielsweise einen bestimmten Aktivierungs-/Deaktivierungsablauf von Slave-Einheiten folgen, z.B. bei Urlaubsabwesenheit, vom Benutzer aktiviert oder deaktiviert werden bzw. abhängig von einem erkannten Sensorsignal eingestellt werden.

Als Slave-Einheiten können beispielsweise Rauchmelder, Brandsensoren, Bewegungssensoren, Tageslichtsensoren Temperatursensoren, Feuchtigkeitssensoren usw. vorgesehen sein. Diese können ein Detektionsereignis drahtlos an die Master-Einheit übermitteln, die beispielsweise als Leuchte ausgestaltet ist. Die Master-Einheit kann dann auch über die Kommunikationsschnittstelle mit dem Internet verbunden sein, um beispielsweise einen Benutzer über einen Nachrichtendienst (Whatsapp, Skype,...) oder per E-mail zu benachrichtigen.

Es ist jedoch auch möglich, dass die Slave-Einheit selbst mit einem Benutzer in Kontakt tritt. Dazu kann die Slave-Einheit dann die Kommunikationsverbindung der Master-Einheit und deren Kommunikationsschnittstelle nutzen. Es kann auch vorgesehen sein, dass die Master-Einheit bei Empfang eines Detektionssignals von einer Slave-Einheit beispielsweise bei Erhalt eines Detektionssignals von einem Sensor in einen bestimmten Betriebszustand wechselt und/oder andere Master-Einheiten oder Slave-Einheiten dazu veranlasst, in einen bestimmten Betriebsmodus zu wechseln. So kann beispielsweise, wenn die Master-Einheit als Leuchte ausgestaltet ist, nach Erhalt eines Detektionssignals ein Blinkmodus eingestellt wird oder es kann eine Veränderung des Farborts und/oder ein Dimmen erfolgen.

Es ist zudem möglich, dass ein Notlichtbetriebsgerät als Slave-Einheit mit einer Master-Einheit verbunden ist. Dies ermöglicht es dann beispielsweise das Abfragen von Informationen aus dem Notlichtgerät, insbesondere das Abfragen eines Ladezustands der Notlichtgeräte-Batterie durch einen Benutzer.

Beispielsweise kann es auch möglich sein, dass abhängig von der der Type der Slave-Einheit und / oder von der Art des Detektionsereignisses das Detektionssignal an unterschiedliche Master-Einheiten oder auch Benutzer weitergeleitet werden. Beispielsweise kann die Weiterleitung des Detektionssignals nur selektiv an bestimmte Master-Einheiten oder unterschiedliche Benutzer erfolgen. Beispielsweise kann ein Detektionssignal eines Rauchmelders oder Brandsensors sowohl direkt an weitere Master-Einheiten als auch an eine Brandmeldezentrale weitergeleitet werden. In einem solchen Fall kann, wenn über die selektierten Master-Einheiten, welche als Leuchte ausgestaltet sind, nach Erhalt eines Detektionssignals ein Blinkmodus eingestellt werden und somit eine optische Warnung ausgegeben werden, und gleichzeitig über die Information der Brandmeldezentrale als Benutzer eine weitergehende Alarmierung erfolgen. Ein Detektionssignal eines Tageslichtsensors kann dagegen beispielsweise nur an die umliegenden Master-Einheiten, welche als Leuchte ausgestaltet sind, weitergeleitet werden, und diese können dann beispielsweise eine Helligkeitsänderung durch Dimmen durchführen. Es können beispielsweise auch Leuchten automatisch aktiviert werden, wenn durch einen Bewegungsmelder eine Bewegung detektiert wird. Dies kann insbesondere dann erfolgen, wenn der Benutzer vorher das Verlassen des Hauses angezeigt hat, beispielsweise durch Verdrahtung entsprechender Informationen an die Master-Einheit oder dass die Master-Einheit beispielsweise durch Überwachung von Türsensoren festgestellt hat, dass das Haus verlassen ist. Die Master-Einheit kann dann ebenfalls den Benutzer informieren (z.B. per SMS, E-Mail, usw.). Wenn dagegen der Benutzer vorher seine Anwesenheit im Haus angezeigt hat, kann nur eine selektive Reaktion durch die Änderung der Helligkeit durch Dimmen initiiert durch die Master-Einheit erfolgen, während keine Weiterleitung der Information an den Benutzer oder andere Master-Einheiten in anderen Gebäuden erfolgt.

Insgesamt lassen sich folglich auf diese Weise auch Informationen von an eine Master-Einheit angeschlossenen Slave-Einheiten abfragen, wie beispielsweise eine Luftfeuchtigkeit, eine Temperatur, usw.

Zudem ist es möglich, dass die Master-Einheit Verwaltungsfunktionen für die Slave-Einheiten übernimmt. Beispielsweise kann die Master-Einheit zeitgesteuert oder auf einen externen Befehl hin Informationen aus einem anderen Netzwerk, beispielsweise dem Internet abrufen, um Konfigurationen der angeschlossenen Slave-Einheiten oder der Master-Einheit selbst (oder damit verbundener Master-Einheiten) zu aktualisieren. Insbesondere kann die Master-Einheit eine Software-Update-Information aus dem Internet abrufen und für die angeschlossenen Slave-Einheiten zur Verfügung stellen.

Insbesondere kann die Master-Einheit, die Software-Update-Informationen an die entsprechenden angeschlossenen bzw. verbundenen Slave-Einheiten übermitteln, um deren Betriebs-Software zu aktualisieren. Diese Übermittlung kann auch zu dem Zeitpunkt geschehen, an dem die Slave-Einheit den nächsten Kontakt mit der Master-Einheit aufnimmt.

Andererseits ist es wie gesagt auch möglich, dass ein Benutzer Informationen an die Master-Einheit übermittelt und so beispielsweise Aktoren steuert. Der Benutzer kann durch Übermittlung an die Master-Einheit, beispielsweise über das Internet und über eine Konfigurationsschnittstelle, die Informationen über die Einheiten beispielsweise über einen Web Browser abrufbar bereitstellt, die Beleuchtung, eine Heiztemperatur, einen Jalousienstand, einstellen, abrufen oder verändern und insgesamt Einheiten und Geräte steuern, aktivieren und/oder deaktivieren.

Ein Beispiel hierfür ist das Einschalten eines Blink- oder Flackermodus einer Leuchte, um beispielsweise Einbrecher abzuschrecken. Auch können verschiedene Szenen abgespeichert sein, die von einem Benutzer in der Master-Einheit abgerufen werden können oder konfiguriert werden können. Eine Anwesenheitssimulation ist ein Beispiel. Es ist auch möglich, das Raumklima verschiedener Räume zu synchronisieren, indem Daten von Feuchtigkeits- und/oder Temperatursensoren ausgewertet werden, um eine entsprechende Klimaeinstellung zu erreichen. Diese Auswertung kann einerseits durch den Benutzer extern erfolgen, andererseits kann jedoch auch die Master-Einheit dazu vorgesehen sein, eine entsprechende Berechnung der Parameter durchzuführen. Insbesondere kann also die Master-Einheit dazu vorgesehen sein, Warnsignale auszugeben.

Es ist vorzugsweise eine Mehrzahl von Sensoren in einen Raum oder mehreren Räumen vorgesehen. Die Sensoren sind vorzugsweise drahtlos miteinander und/oder einer Master-Einheit, insbesondere einer Master-Leuchte verbunden. Es ist zu verstehen, dass eine Master-Leuchte auch mit anderen Slave-Leuchten verbunden sein kann. Die angeschlossenen Slave-Einheiten, insbesondere die Sensoren, übermitteln Informationen beispielsweise bei Überschreiten bestimmter Schwellenwerte an die Master-Einheit. Über ein Auslese-/Eingabe-Gerät kann der Benutzer, beispielsweise über eine Applikation auf einem Smartphone, Daten auslesen und Konfigurationsdaten in den Master-Einheiten bzw. Slave-Einheiten verändern, d.h. Grenzwerte einstellen oder Kommunikationseinstellungen eingeben oder verändern, die die Weitergabe von Daten betreffen. Die Master-Einheit sammelt also zentral Informationen über die angeschlossenen Sensoren und erlaubt es diese auszulesen bzw. weiterzuleiten.

Z.B. kann eine Leuchte ein Signal durch Blinken ausgeben, wenn ein Gassensor/Brandmelder ein Detektionsereignis ausgibt. Die Leuchte kann dann einerseits ein vordefiniertes Beleuchtungsschema aktivieren, beispielsweise ein Blinken, und andererseits den Benutzer per SMS, E-Mail, Nachrichtendienst, usw. informieren.

Leuchten können auch automatisch aktiviert werden, wenn durch einen Bewegungsmelder eine Bewegung detektiert wird. Dies kann insbesondere dann erfolgen, wenn der Benutzer vorher das Verlassen des Hauses angezeigt hat, beispielsweise durch Verdrahtung entsprechender Informationen an die Master-Einheit oder dass die Master-Einheit beispielsweise durch Überwachung von Türsensoren festgestellt hat, dass das Haus verlassen ist. Die Master-Einheit kann dann ebenfalls den Benutzer informieren (z.B. per SMS, E-Mail, usw.).

Weiter kann der Benutzer informiert werden, wenn die Luftfeuchtigkeit einen bestimmten Schwellenwert, beispielsweise 80%, überschreitet. Die Master-Einheit kann entweder eine vordefinierte Nachricht (beispielsweise Fenster öffnen, Luftfeuchtigkeit zu hoch) an den Benutzer übermitteln. Es ist selbstverständlich auch, wie oben bereits ausgeführt, möglich, dass ein angeschlossener Sensor selbst eine entsprechende Nachricht an den Benutzer übermittelt unter Verwendung der Kommunikationsmöglichkeiten der Master-Einheit, und insbesondere unter Verwendung der Kommunikationsschnittstelle der Master-Einheit.

In einem weiteren Beispiel kann eine Meldung bei Überschreiten einer bestimmten Temperatur ausgegeben werden.

Die Master-Einheiten können dabei Betriebsgeräte nutzen, die insbesondere als IC, ASIC oder Mikrokontrolle ausgebildet sind.

Fig. 1 zeigt schematisch ein Gebäudetechnik-Kommunikationssystem 1 nach der Erfindung.

Zunächst ist eine Master-Einheit 10 gezeigt, der die Slave-Einheiten 11-16 zugeordnet sind. Zwischen der Mastereinheit 10 und den Slave-Einheiten 11 und 16 wird eine Kommunikationsverbindung aufgebaut, was durch die symbolischen Funkwellen dargestellt ist. Eine Kommunikationsverbindung der Master-Einheit 10 zu den Slave-Einheiten 12, 13, 14 und 16 und umgekehrt ist bereits etabliert, was durch die gestrichpunkteten Linien dargestellt ist. Dabei ist zu verstehen, dass die Kommunikationsverbindungen nicht ständig aktiv sein müssen, sondern bei Bedarf aktiviert werden können, durch die Master-Einheit 10 und/oder die Slave-Einheiten 12, 13, 14 und 16. Die Slave-Einheit 13 ist über die Slave-Einheit 14 mit der Mastereinheit 10 verbunden.

Die Save-Einheiten 11-16 müssen dabei jedoch z.B. nicht im gleichen Raum angebracht sein wie die Mastereinheit. Raumgrenzen sind in Fig. 1 durch die Barrieren 20 und 21 angedeutet. So kann die Slave-Einheit 16 beispielsweise räumlich getrennt von der Mastereinheit 10 angeordnet sein. Eine Slave-Einheit 17, die noch weiter räumlich von der Master-Einheit 10 getrennt ist, kann indessen über eine weitere Slave-Einheit, die Slave-Einheit 16, angebunden sein.

Die Master-Einheit 10 kann zudem eine Kommunikationsschnittstelle 18 aufweisen, die dazu eingerichtet ist, eine Kommunikationsverbindung nach Außerhalb der Master-Einheit 10 bereitzustellen. Z.B. kann die Kommunikationsschnittstelle 18 eine Netzwerkverbindung 30, insbesondere eine IP-Netzwerkverbindung bereitstellen. Die Master-Einheit 10 kann somit Nachrichten, Daten und Informationen über die Kommunikationsschnittstelle 18 versenden an ein Netzwerk und/oder davon empfangen.

Weiter ist in Fig. 1 eine weitere Master-Einheit 40 gezeigt, die ebenfalls eine Kommunikationsschnittstelle 48 aufweisen kann. Die weitere Master-Einheit 40 kann mit der Master-Einheit 10 drahtgebunden oder drahtlos verbunden sein (gepunktete Linie). Dazu kann die Mastereinheit 10 eine Schnittstelle 19 aufweisen. Ebenso kann die weitere Master-Einheit 40 eine entsprechende Schnittstelle aufweisen, um die Verbindung zur Master-Einheit 10 und deren Schnittstelle 19 zu ermöglichen. Über die Verbindung zur Master-Einheit 10 kann die weitere Master-Einheit 40 auch die Kommunikationsschnittstelle 18 nutzen zum Senden und/oder Empfangen von Daten, Nachrichten oder Informationen.

Der weiteren Master-Einheit 40 können die Slave-Einheiten 41-43 zugeordnet sein, wobei die Slave-Einheit 43 über eine Slave-Einheit 42 indirekt an die weitere Master-Einheit 40 angebunden ist. Die weitere Master-Einheit 40 kann jedoch im Wesentlichen identisch mit der Master-Einheit 10 ausgebildet sein.

Insbesondere kann ein Beleuchtungssystem aufweisend eine Leuchte als Mastereinheit 10, 40 mit einer Vielzahl von Sensoren und/oder Sicherheitseinrichtungen als Slave-Einheiten 11-17; 41-43 verwirklicht sein und einer Drahtlos-Kommunikationsschnittstelle 18, welche dazu ausgelegt ist bei vorliegen eines Fehlers und/oder eines Sicherheitsrisikos, welches von den Sensoren und/oder Sicherheitseinrichtungen festgestellt wird, Warnsignale auszugeben. Die Warnsignale werden insbesondere über die Kommunikationsschnittstelle 18 ausgegeben oder durch Ändern z.B. der Lichtemission der Leuchte. Die Warnsignale können also durch eine Aktivierung der Leuchte und/oder Aussendung eines optischen, akustischen, usw. Signals von den Slave-Einheiten und/oder einer Aussendung einer Benachrichtigung von der Kommunikationsschnittstelle 18 der Leuchte zu einem Benutzer erfolgen. Die Slave-Einheiten und/oder Sicherheitseinrichtungen können untereinander Warnsignale, vorzugsweise drahtlos, weitergeben. Die Leuchte kann über die Kommunikationsschnittstelle 18 Befehle an eine zentrale Steuereinrichtung senden, um die Fehler und/oder Sicherheitsrisiken anzuzeigen. Grenzwerte für Fehler und/oder Sicherheitsrisiken können von einem Benutzer individuell eingestellt werden.

Bei dem Gebäudetechnikgerät 10 nach Fig. 1 kann es sich wie gesagt um ein Steuergerät handeln. Dieses Steuergerät einen Aktor, bspw. ein Betriebsgerät für Leuchtmittel, oder einen Sensor (z.B. Slave-Einheit 11, 12) ansteuern und zur drahtlosen adressierten Kommunikation ausgelegt sein. Es kann eine Schnittstelle z.B. die Schnittstelle 19, 49 zur drahtlosen Kommunikation mit einem zweiten Steuergerät, z.B. der weiteren Master-Einheit 40 vorgesehen sein, und eine Steuerschaltung (nicht gezeigt) zur Weiterleitung von von dem zweiten Steuergerät, z.B. der weiteren Master-Einheit 40 empfangenen Information an ein drittes, in der Information adressiertes Steuergerät (nicht gezeigt).

Die Steuerschaltung z.B. der Master-Einheiten 10, 40 kann mit einem Speicher verbunden sein, in dem die mittels der drahtlosen Kommunikation erreichbaren weiteren Steuergeräte und ihre zugehörigen Adressen abgelegt sind.

## Patentansprüche

1. Gebäudetechnik-Kommunikationssystem (1) mit einem Gebäudetechnikgerät als Master-Einheit (10), wobei die Master-Einheit (10) als Steckdose ausgestaltet ist, und Slave-Einheiten (13, 14),
o wobei mit der Master-Einheit (10) die Slave-Einheiten (13, 14) netzwerktechnisch verbunden sind, wobei die Master-Einheit (10) eine Hauptkommunikationseinheit im Netzwerk ist und jede Slave-Einheit der Slave-Einheiten (13, 14) des Netwerks als eine der Master-Einheit untergeordnete Kommunikationseinheit im Netzwerk mit der Master-Einheit (10) verbunden ist;
o wobei jede Slave-Einheit der Slave-Einheiten (13, 14) des Netzwerks dazu eingerichtet ist entweder direkt oder indirekt mittels anderer Slave-Einheiten (14) der Slave-Einheiten (13, 14) des Netzwerks mit der Master-Einheit (10) über eine Netzwerkverbindung zu kommunizieren und zumindest eine Slave-Einheit der Slave-Einheiten (13, 14) des Netzwerks dazu eingerichtet ist indirekt mittels einer weiteren Slave-Einheit der Slave-Einheiten (13, 14) des Netwerks mit der Master-Einheit (10) zu kommunizieren;
o wobei die Master-Einheit (10) weiterhin dazu eingerichtet ist einen vollständigen Pfad im Netzwerk von der Master-Einheit (10) zu jeder Slave-Einheit der Slave-Einheiten (13, 14) des Netwerks zu speichern;
o wobei jede Slave-Einheit (14) der Slave-Einheiten (13, 14) des Netzwerks, die eine Nachricht von einer anderen Slave-Einheit (13) des Netzwerks empfängt, dazu eingerichtet ist, diese Nachricht weiterzuleiten und Informationen darüber zu speichern von welcher Slave-Einheit die Nachricht empfangen wurde und/oder an welche Einheit die Nachricht weitergeleitet wurde;
o wobei die Master-Einheit (10) dazu eingerichtet ist von den Slave-Einheiten (13, 14) des Netzwerks empfangene Informationen über eine Kommunikationsschnittstelle (18) zu versenden.

2. Gebäudetechnik-Kommunikationssystem (1) nach Anspruch 1, **dadurch gekennzeichnet,**
**dass** die Master-Einheit (10) dazu eingerichtet ist, über die Kommunikationsschnittstelle (18) empfangene Informationen an die Slave-Einheiten (13, 14) des Netwerks zu übermitteln; und/oder
**dass** die Master-Einheit (10) dazu eingerichtet ist, Kommunikationsverbindungen zwischen den Slave-Einheiten (11, 12) des Netzwerks bereitzustellen; und/oder
**dass** die Master-Einheit (10) dazu eingerichtet ist, mit einer weiteren Master-Einheit (40) und/oder indirekt oder direkt mit einer Zentraleinheit eine Kommunikationsverbindung zur Kommunikation aufzubauen.

3. Gebäudetechnik-Kommunikationssystem (1) nach einem der vorgehenden Ansprüche, **dadurch gekennzeichnet,**
**dass** die Slave-Einheiten (13, 14) dazu eingerichtet sind, mit der Master-Einheit (10) eine Kommunikationsverbindung aufzubauen; und/oder
**dass** jede Slave-Einheit der Slave-Einheiten (13, 14) des Netzwerks und die Master-Einheit dazu eingerichtet sind, zu speichern, von welcher Einheit eine Nachricht empfangen wurde und von welcher Einheit die Nachricht versendet wurde.

4. Gebäudetechnik-Kommunikationssystem (1) nach einem der vorgehenden Ansprüche, **dadurch gekennzeichnet,**
**dass** die Slave-Einheiten (13, 14) des Netzwerks eine Nachricht bezüglich eines erfassten Ereignisses versenden.

5. Gebäudetechnik-Kommunikationssystem (1) nach einem der vorgehenden Ansprüche, **dadurch gekennzeichnet,**
**dass** die Slave-Einheiten (13, 14) des Netzwerks dazu eingerichtet sind, ihre Konfigurationsdaten und/oder von ihre erfasste Informationen bezüglich des erfassten Ereignisses an die Master-Einheit (10) zu übermitteln oder davon zu empfangen; und/oder
**dass** die Master-Einheit (10) dazu eingerichtet ist, Konfigurationsdaten und/oder Informationen bezüglich des erfassten Ereignisses für jede mit ihr verbundene Slave-Einheit (13, 14) zu speichern, zu versenden, und/oder Konfigurationsdaten und/oder auf ein Abfrage-Signal an jede Slave-Einheit (13, 14) des Netzwerks zu übermitteln.

6. Gebäudetechnik-Kommunikationssystem (1) nach einem der vorgehenden Ansprüche, **dadurch gekennzeichnet,**
**dass** jede Slave-Einheit (13, 14) des Netwerks dazu eingerichtet ist, bei Erfassung eines Detektionsereignisses, das heißt einer Information bezüglich eines erfassten Ereignisses, eine Detektionsnachricht an die Master-Einheit (10) zu übermitteln, und wobei die Master-Einheit (10) dazu eingerichtet ist, die Detektionsnachricht und/oder eine dieser zugeordneten Nachricht mittels der Kommunikationsschnittstelle (18) zu übermitteln/weiterzuleiten; und/oder
**dass** dieMaster-Einheit (10) dazu eingerichtet ist, mittels eines Eingabegeräts versendete Konfigurationsparameter zu empfangen, auf deren Basis Einstellungsparameter für die Master-Einheit (10) und/oder die Slave-Einheiten (13, 14) einstellbar sind, und wobei sich die Master-Einheit (10) abhängig von den Einstellungsparametern bei Eingang der Detektionsnachricht in unterschiedlicher Weise verhält.

7. Gebäudetechnik-Kommunikationssystem (1) nach einem der vorgehenden Ansprüche, **dadurch gekennzeichnet,**
**dass** die Slave-Einheiten (13, 14) des Netzwerks Sensoren und/oder Aktoren ist.

8. Gebäudetechnik-Kommunikationssystem (1) nach einem der vorgehenden Ansprüche, **dadurch gekennzeichnet,**
**dass** die Kommunikationsschnittstelle (18) eine drahtlose oder drahtgebundene Schnittstelle ist.

9. Gebäudetechnik-Kommunikationssystem (1) nach einem der vorgehenden Ansprüche, **dadurch gekennzeichnet,**
**dass** die Master-Einheit (10) dazu ausgelegt ist, abhängig vom Detektionsereignis oder abhängig von der Art einer Slave-Einheit (13, 14) der Slave-Einheiten (13, 14) des Netwerksempfangene Informationen selektiv an unterschiedliche Benutzer oder Master-Einheiten zu senden.

## Claims

1. Building technology communication system (1) comprising a building technology device as a master unit (10), wherein the master unit (10) is designed as a socket, and slave units (13, 14),
∘ wherein the slave units (13, 14) are connected to the master unit (10) by network technology, wherein the master unit (10) is a main communication unit in the network and each slave unit of the slave units (13, 14) in the network is connected to the master unit (10) as a communication unit in the network that is subordinate to the master unit;
∘ wherein each slave unit of the slave units (13, 14) in the network is configured to communicate with the master unit (10) via a network connection either directly or indirectly by means of other slave units (14) of the slave units (13, 14) in the network, and at least one slave unit of the slave units (13, 14) in the network is configured to communicate indirectly with the master unit (10) by means of a further slave unit of the slave units (13, 14) in the network;
∘ wherein the master unit (10) is further configured to store a complete path in the network from the master unit (10) to each slave unit of the slave units (13, 14) in the network;
∘ wherein each slave unit (14) of the slave units (13, 14) in the network that receives a message from another slave unit (13) in the network is configured to forward this message and to store information as to which slave unit received the message and/or to which unit the message was forwarded;
∘ wherein the master unit (10) is configured to send information received from the slave units (13, 14) in the network via a communication interface (18).

2. Building technology communication system (1) according to Claim 1, **characterized in that** the master unit (10) is configured to transmit information received via the communication interface (18) to the slave units (13, 14) in the network; and/or **in that** the master unit (10) is configured to provide communication connections between the slave units (11, 12) in the network; and/or **in that** the master unit (10) is configured to establish a communication connection for communication with a further master unit (40) and/or indirectly or directly with a central unit.

3. Building technology communication system (1) according to either of the preceding claims, **characterized in that** the slave units (13, 14) are configured to establish a communication link with the master unit (10); and/or **in that** each slave unit of the slave units (13, 14) in the network and the master unit are configured to store from which unit a message was received and from which unit the message was sent.

4. Building technology communication system (1) according to any one of the preceding claims, **characterized in that** the slave units (13, 14) in the network send a message regarding a detected event.

5. Building technology communication system (1) according to any one of the preceding claims, **characterized in that** the slave units (13, 14) in the network are configured to send to the master unit (10) or receive therefrom their configuration data and/or their received information regarding the detected event; and/or **in that** the master unit (10) is configured to store, send configuration data and/or information regarding the detected event for each slave unit (13, 14) connected thereto, and/or to forward configuration data and/or in a query signal to each slave unit (13, 14) in the network.

6. Building technology communication system (1) according to any one of the preceding claims, **characterized in that** each slave unit (13, 14) in the network is configured to transmit to the master unit (10) a detection message when a detection event, that is to say information relating to a detected event, is detected, and wherein the master unit (10) is configured to transmit/forward by means of the communication interface (18) the detection message and/or a message assigned thereto; and/or **in that** the master unit (10) is configured to receive configuration parameters sent by means of an input device on the basis of which setting parameters for the master unit (10) and/or the slave units (13, 14) can be set, and wherein the master unit (10) behaves differently upon receipt of the detection message depending on the setting parameters.

7. Building technology communication system (1) according to any one of the preceding claims, **characterized in that** the slave units (13, 14) in the network are sensors and/or actuators.

8. Building technology communication system (1) according to any one of the preceding claims, **characterized in that** the communication interface (18) is a wireless or wired interface.

9. Building technology communication system (1) according to any one of the preceding claims, **characterized in that** the master unit (10) is designed to selectively send received information to different users or master units depending on the detection event or depending on the type of a slave unit (13, 14) of the slave units (13, 14) in the network.

## Revendications

1. Système de communication domotique (1) comportant un appareil domotique en tant qu'unité maître (10), l'unité maître (10) étant conçue en tant que prise de courant, et des unités esclaves (13, 14),
o dans lequel les unités esclaves (13, 14) sont connectées selon la technique du réseau à l'unité maître (10), l'unité maître (10) étant une unité de communication principale dans le réseau et chaque unité esclave des unités esclaves (13, 14) du réseau étant reliée à l'unité maître (10) en tant qu'une unité de communication subordonnée à l'unité maître dans le réseau ;
o dans lequel chaque unité esclave des unités esclaves (13, 14) du réseau est configurée pour communiquer soit directement, soit indirectement, avec l'unité maître (10) par l'intermédiaire d'une connexion réseau au moyen d'autres unités esclaves (14) des unités esclaves (13, 14) du réseau et au moins une unité esclave des unités esclaves (13, 14) du réseau est configurée pour communiquer indirectement avec l'unité maître (10) au moyen d'une autre unité esclave des unités esclaves (13, 14) du réseau ;
o dans lequel l'unité maître (10) est en outre configurée pour enregistrer un chemin complet dans le réseau depuis l'unité maître (10) vers chaque unité esclave des unités esclaves (13, 14) du réseau ;
o dans lequel chaque unité esclave (14) des unités esclaves (13, 14) du réseau recevant un message en provenance d'une autre unité esclave (13) du réseau est configurée pour communiquer ledit message et enregistrer des informations concernant l'unité esclave en provenance de laquelle le message a été reçu et/ou à laquelle unité le message a été communiqué ;
o dans lequel l'unité maître (10) est configurée pour envoyer des informations reçues en provenance des unités esclaves (13, 14) du réseau par l'intermédiaire d'une interface de communication (18).

2. Système de communication domotique (1) selon la revendication 1, **caractérisé en ce que** l'unité maître (10) est configurée pour transmettre des informations reçues par l'intermédiaire de l'interface de communication (18) aux unités esclaves (13, 14) du réseau ; et/ou **en ce que** l'unité maître (10) est configurée pour fournir des liaisons de communication entre les unités esclaves (11, 12) du réseau ; et/ou **en ce que** l'unité maître (10) est configurée pour établir une liaison de communication pour la communication avec une autre unité maître (40) et/ou indirectement ou directement avec une unité centrale.

3. Système de communication domotique (1) selon l'une des revendications précédentes, **caractérisé en ce que** les unités esclaves (13, 14) sont configurées pour établir une liaison de communication avec l'unité maître (10) ; et/ou **en ce que** chaque unité esclave des unités esclaves (13, 14) du réseau et l'unité maître sont configurées pour enregistrer l'unité en provenance de laquelle un message a été reçu et depuis laquelle unité le message a été envoyé.

4. Système de communication domotique (1) selon l'une des revendications précédentes, **caractérisé en ce que** les unités esclaves (13, 14) du réseau envoient un message concernant un événement détecté.

5. Système de communication domotique (1) selon l'une des revendications précédentes, **caractérisé en ce que** les unités esclaves (13, 14) du réseau sont configurées pour transmettre à l'unité maître (10) ou recevoir en provenance de celle-ci leurs données de configuration et/ou leurs informations détectées concernant l'événement détecté ; et/ou **en ce que** l'unité maître (10) est configurée pour enregistrer des données de configuration et/ou des informations concernant l'événement détecté pour chaque unité esclave (13, 14) connectée à celle-ci et/ou pour les leur envoyer et/ou pour transmettre des données de configuration et/ou un signal d'interrogation à chaque unité esclave (13, 14) du réseau.

6. Système de communication domotique (1) selon l'une des revendications précédentes, **caractérisé en ce que** chaque unité esclave (13, 14) du réseau est configurée pour transmettre un message de détection à l'unité maitre (10) lors de la détection d'un événement de détection, c'est-à-dire d'informations concernant un événement détecté, et l'unité maître (10) étant configurée pour transmettre/communiquer le message de détection et/ou un message associé à celui-ci au moyen de l'interface de communication (18) ; et/ou **en ce que** l'unité maître (10) est configurée pour recevoir des paramètres de configuration envoyés au moyen d'un appareil d'entrée, sur la base desquels des paramètres de réglage pour l'unité maître (10) et/ou les unités esclaves (13, 14) peuvent être réglés, et l'unité maître (10) se comportant de manière différente en fonction des paramètres de réglage lors de l'entrée du message de détection.

7. Système de communication domotique (1) selon l'une des revendications précédentes, **caractérisé en ce que** les unités esclaves (13, 14) du réseau sont des capteurs et/ou des actionneurs.

8. Système de communication domotique (1) selon l'une des revendications précédentes, **caractérisé en ce que** l'interface de communication (18) est une interface sans fil ou filaire.

9. Système de communication domotique (1) selon l'une des revendications précédentes, **caractérisé en ce que** l'unité maître (10) est configurée pour envoyer de manière sélective des informations reçues en fonction de l'événement de détection ou en fonction du type d'unité esclave (13, 14) des unités esclaves (13, 14) du réseau à différents utilisateurs ou unités maîtres.
